(19) Europäisches Patentamt
European Patent Office
Office européen des brevets

(11) EP 2 366 557 B1

(12) **EUROPEAN PATENT SPECIFICATION**

(45) Date of publication and mention of the grant of the patent:
**23.05.2012 Bulletin 2012/21**

(51) Int Cl.:
***B60C 1/00*** *(2006.01)* ***C08C 19/22*** *(2006.01)*
***C08C 19/25*** *(2006.01)* ***C08L 9/06*** *(2006.01)*
*C08L 15/00* *(2006.01)*

(21) Application number: **11000443.9**

(22) Date of filing: **20.01.2011**

# (54) Tire rubber composition and pneumatic tire

Reifengummizusammensetzung und Luftreifen

Composition de caoutchouc de pneu et pneu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2010 JP 2010059840**

(43) Date of publication of application:
**21.09.2011 Bulletin 2011/38**

(73) Proprietor: **Sumitomo Rubber Industries, Ltd.**
**Kobe-shi, Hyogo 651-0072 (JP)**

(72) Inventor: **Kondo, Toshikazu**
**Kobe-shi**
**Hyogo 651-0072 (JP)**

(74) Representative: **Manitz, Finsterwald & Partner GbR**
**Postfach 31 02 20**
**80102 München (DE)**

(56) References cited:
**EP-A1- 1 882 716** **EP-A1- 2 072 280**
**EP-A1- 2 154 006** **EP-A1- 2 159 074**
**EP-A2- 1 876 203** **WO-A1-2009/084667**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 366 557 B1

Printed by Jouve, 75001 PARIS (FR)

**Description**

TECHNICAL FIELD

The present invention relates to a rubber composition for a tire, and a pneumatic tire produced using the rubber composition.

BACKGROUND ART

For the global environmental protection, high fuel-economy automobiles are being developed. This situation has resulted in demand for automobile tires with low rolling resistance.

Rolling resistance of a tire mainly results from the energy loss caused by repetitive deformation of rubber upon running. In order to reduce rolling resistance, for example, there has been proposed a tire having a structure in which a tread part, which shows the highest rolling-resistance contributing ratio (about 34%), consists of two layers of rubber; the inside rubber layer (base tread) is made of a rubber with a low energy loss while the outside rubber layer (cap tread) is made of a rubber with excellent abrasion resistance (Patent Document 1). In this case, however, there is still room for improvement in the reduction of rolling resistance.

In the case that the cap tread rubber is made to generate a low energy loss, rolling resistance is reduced. However, disadvantageously, grip performance (especially, wet grip performance) is lowered and abrasion resistance and cut and chip resistance are also deteriorated.

Further, there has been an approach to reduce rolling resistance in which silica is used in combination with a styrene-butadiene rubber that is modified for the combination use with silica. However, keadability is disadvantageously deteriorated in the case that the styrene-butadiene rubber modified for the combination use with silica is used in a large amount.

Patent Document 1: JP 2009-079077 A

SUMMARY OF THE INVENTION

An object of the present invention is to provide a rubber composition for a tire that achieves a good balance of grip performance (especially, wet grip performance), abrasion resistance, cut and chip resistance, the rolling resistance property (low rolling resistance), and kneadability, and a pneumatic tire produced using the rubber composition, thereby solving the aforementioned problems.

The present invention relates to a rubber composition for a tire, comprising: a rubber component including a styrene-butadiene rubber modified by a compound represented by formula (1):

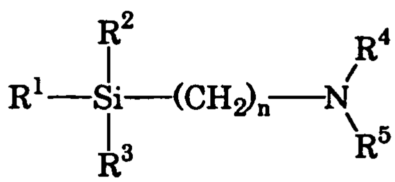

(1)

wherein $R^1$, $R^2$, and $R^3$ may be the same as or different from each other, and each represents an alkyl group, an alkoxy group, a silyloxy group, an acetal group, a carboxyl group, a mercapto group, or a derivative thereof; $R^4$ and $R^5$ may be the same as or different from each other, and each represents a hydrogen atom or an alkyl group; and n is an integer, and a non-modified styrene-butadiene rubber; a filler including silica, the filler being in an amount of 80 parts by mass or less per 100 parts by mass of the rubber component; and sulfur in an amount of 0.5 to 1.5 parts by mass per 100 parts by mass of the rubber component, the modified styrene-butadiene rubber having a bound styrene content of 20 to 40% by mass and a vinyl content of 30 to 65% by mass, and the non-modified styrene-butadiene rubber having a bound styrene content of 25 to 45% by mass and a vinyl content of 10 to 50% by mass.

In the rubber composition for a tire, the rubber component preferably further includes a natural rubber.

The rubber composition for a tire is preferably used for a tread.

The present invention also relates to a pneumatic tire produced using the rubber composition.

The rubber composition for a tire according to the present invention comprises: a rubber component including a styrene-butadiene rubber modified by the compound of formula (1) which has a specific bound styrene content and

vinyl content, and a non-modified styrene-butadiene rubber which has a predetermined bound styrene content and vinyl content; a filler (including silica) in an amount of not more than a specific amount; and sulfur in a predetermined amount. Therefore, the rubber composition can show a good balance of grip performance (especially, wet grip performance), abrasion resistance, cut and chip resistance, the rolling resistance property (low rolling resistance), and kneadability. In addition, the rubber composition can provide a pneumatic tire that is excellent in grip performance (especially, wet grip performance), abrasion resistance, cut and chip resistance, and the rolling resistance property.

BEST MODE FOR CARRYING OUT THE INVENTION

The rubber composition for a tire of the present invention comprises: a rubber component including a styrene-butadiene rubber modified by the compound of formula (1) (modified SBR) which has a specific bound styrene content and vinyl content, and a non-modified styrene-butadiene rubber (non-modified SBR) which has a predetermined bound styrene content and vinyl content; a filler (reinforcing filler, including silica) in an amount of not more than a specific amount; and sulfur in a predetermined amount.

In the present invention, the aforementioned modified styrene-butadiene rubber enables reduction in rolling resistance. It is also possible to further reduce rolling resistance by containing silica as filler and adjusting the amount of filler to not more than the specific amount. In addition, the aforementioned non-modified styrene-butadiene rubber enables improvement in grip performance (especially, wet grip performance), keadability, abrasion resistance, and cut and chip resistance. Furthermore, abrasion resistance and cut and chip resistance can be improved by containing the predetermined amount of sulfur.

The rubber composition of the present invention contains a styrene-butadiene rubber modified by the compound of formula (1) (modified SBR) which has a specific bound styrene content and vinyl content. Thus, rolling resistance is reduced while silica dispersibility and, therefore, abrasion resistance are improved.

In the compound of formula (1), $R^1$, $R^2$, and $R^3$ may be the same as or different from each other, and each represents an alkyl group, an alkoxy group, a silyloxy group, an acetal group, a carboxyl group (-COOH), a mercapto group (-SH), or a derivative thereof. Examples of the alkyl group include C1-C4 alkyl groups such as a methyl group, an ethyl group, an n-propyl group, an isopropyl group, an n-butyl group, and a t-butyl group. Examples of the alkoxy group include C1-C8 (preferably C1-C6, more preferably C1-C4) alkoxy groups such as a methoxy group, an ethoxy group, an n-propoxy group, an isopropoxy group, an n-butoxy group, and a t-butoxy group. Here, examples of the alkoxy group further include cycloalkoxy groups (e.g. C5-C8 cycloalkoxy groups such as a cyclohexyloxy group) and aryloxy groups (e.g. C6-C8 aryloxy groups such as a phenoxy group and a benzyloxy group).

Examples of the silyloxy group include silyloxy groups with substitution by a C1-C20 aliphatic or aromatic group (e.g. a trimethylsilyloxy group, a triethylsilyloxy group, a triisopropylsilyloxy group, a diethylisopropylsilyloxy group, a t-butyldimethylsilyloxy group, a t-butyldiphenylsilyloxy group, a tribenzylsilyloxy group, a triphenylsilyloxy group, and a tri-p-xylylsilyloxy group).

Examples of the acetal group include groups represented by -C(RR')-OR" and -O-C(RR')-OR". The former may be a methoxymethyl group, an ethoxymethyl group, a propoxymethyl group, a butoxymethyl group, an isopropoxymethyl group, a t-butoxymethyl group, a neopentyloxymethyl group, or the like. The latter may be a methoxymethoxy group, an ethoxymethoxy group, a propoxymethoxy group, an i-propoxymethoxy group, an n-butoxymethoxy group, a t-butoxymethoxy group, an n-pentyloxymethoxy group, an n-hexyloxymethoxy group, a cyclopentyloxymethoxy group, a cyclohexyloxymethoxy group, or the like. $R^1$, $R^2$, and $R^3$ each are preferably an alkoxy group. In such a case, the reduction in rolling resistance owing to the modified SBR can be further enhanced.

The alkyl group for $R^4$ and $R^5$ may be exemplified by the same alkyl groups as those mentioned above.

The integer of n is preferably 1 to 5. The integer of n is more preferably 2 to 4, and is most preferably 3. If n is 0, the silicon atom and the nitrogen atom have difficulty in bonding to each other, while if n is 6 or greater, the modifying effect may weaken.

Specific examples of the compound of formula (1) include: 3-aminopropyldimethylmethoxysilane, 3-aminopropylmethyldimethoxysilane, 3-aminopropylethyldimethoxysilane, 3-aminopropyltrimethoxysilane, 3-aminopropyldimethylethoxysilane, 3-aminopropylmethyldiethoxysilane, 3-aminopropyltriethoxysilane, 3-aminopropyldimethylbutoxysilane, 3-aminopropylmethyldibutoxysilane, dimethylaminomethyltrimethoxysilane, 2-dimethylaminoethyltrimethoxysilane, 3-dimethylaminopropyltrimethoxysilane, 4-dimethylaminobutyltrimethoxysilane, dimethylaminomethyldimethoxymethylsilane, 2-dimethylaminoethyldimethoxymethylsilane, 3-dimethylaminopropyldimethoxymethylsilane, 4-dimethylaminobutyldimethoxymethylsilane, dimethylaminomethyltriethoxysilane, 2-dimethylaminoethyltriethoxysilane, 3-dimethylaminopropyltriethoxysilane, 4-dimethylaminobutyltriethoxysilane, dimethylaminomethyldiethoxymethylsilane, 2-dimethylaminoethyldiethoxymethylsilane, 3-dimethylaminopropyldiethoxymethylsilane, 4-dimethylaminobutyldiethoxymethylsilane, diethylaminomethyltrimethoxysilane, 2-diethylaminoethyltrimethoxysilane, 3-diethylaminopropyltrimethoxysilane, 4-diethylaminobutyltrimethoxysilane, diethylaminomethyldimethoxymethylsilane, 2-diethylaminoethyldimethoxymethylsilane, 3-diethylaminopropyldimethoxymethylsilane, 4-diethylaminobutyldimethoxymethylsilane, diethylaminomethyltriethoxysilane, 2-diethylaminoethyltriethoxysilane, 3-diethylaminopropyltriethoxysilane, 4-diethylaminobutyltriethoxysilane, diethylaminomethyldiethoxymethylsilane, 2-diethylaminoethyldiethoxymethylsilane, 3-diethylaminopropyldiethoxymethylsilane, and 4-diethylaminobutyldiethoxymethylsilane. Each of these may be used alone or two or more of these may be used in combination.

The method for modifying styrene-butadiene rubber with the compound (modifying agent) of formula (1) is exemplified by conventional methods such as methods disclosed for example in JP H06-53768 B and JP H06-57767 B. Any method may be employed as long as styrene-butadiene rubber is brought in contact with the modifying agent. Examples of the method include: a method in which styrene-butadiene rubber is formed by polymerization and a predetermined amount of the modifying agent is then added to the polymerized rubber solution; and a method in which the modifying agent is added to a solution of styrene-butadiene rubber such that they react with each other.

The styrene-butadiene rubber (SBR) to be modified is not particularly limited. Examples thereof include emulsion-polymerized styrene-butadiene rubber (E-SBR) and solution-polymerized styrene-butadiene rubber (S-SBR).

The modified SBR has a vinyl content of 30% by mass or more, preferably 33% by mass or more, and more preferably 35% by mass or more. A modified SBR with a vinyl content of less than 30% by mass tends to cause excessively low grip performance (especially, wet grip performance).

The vinyl content is 65% by mass or less, preferably 62% by mass or less, and more preferably 60% by mass or less. A modified SBR with a vinyl content of more than 65% by mass tends to cause deterioration in abrasion resistance.

The vinyl content (1,2-butadiene unit content) herein may be measured by infrared absorption spectrum analysis.

The modified SBR has a bound styrene content of 20% by mass or more, preferably 23% by mass or more, and more preferably 25% by mass or more. A modified SBR with a bound styrene content of less than 20% by mass tends to cause excessively low grip performance (especially, wet grip performance). The bound styrene content is 40% by mass or less, preferably 38% by mass or less, and more preferably 36% by mass or less. A modified SBR with a bound styrene content of more than 40% by mass tends to cause more heat build-up.

The bound styrene content herein may be determined by $H^1$-NMR measurement.

The modified SBR is preferably used in an amount of 10% by mass or more, more preferably 15% by mass or more, and further preferably 20% by mass or more in 100% by mass of the rubber component. Less than 10% by mass of the modified SBR tends to cause insufficient reduction in rolling resistance. The modified SBR is preferably used in an amount of 70% by mass or less, more preferably 60% by mass or less, further preferably 50% by mass or less, and particularly preferably 40% by mass or less. More than 70% by mass of the modified SBR tends to cause deterioration in kneadability and cut and chip resistance.

The rubber composition of the present invention contains a non-modified styrene-butadiene rubber (non-modified SBR) which has a predetermined bound styrene content and vinyl content. Thus, grip performance (especially, wet grip performance), keadability, abrasion resistance, and cut and chip resistance are improved.

The non-modified SBR may be the same SBR (E-SBR, S-SBR) as the aforementioned styrene-butadiene rubber (SBR) to be modified. In particular, S-SBR is preferable owing to its ability to reduce rolling resistance.

The non-modified SBR has a vinyl content of 10% by mass or more, preferably 12% by mass or more, more preferably 14% by mass or more, and further preferably 18% by mass or more. A non-modified SBR with a vinyl content of less than 10% by mass tends to cause excessively low grip performance (especially, wet grip performance).

The vinyl content is 50% by mass or less, preferably 48% by mass or less, and more preferably 46% by mass or less. A non-modified SBR with a vinyl content of more than 50% by mass tends to cause deterioration in the rolling resistance property.

The non-modified SBR has a bound styrene content of 25% by mass or more, preferably 28% by mass or more, and more preferably 30% by mass or more. A non-modified SBR with a bound styrene content of less than 25% by mass tends to cause excessively low grip performance (especially, wet grip performance). The bound styrene content is 45% by mass or less, preferably 43% by mass or less, and more preferably 41% by mass or less. A non-modified SBR with a bound styrene content of more than 45% by mass tends to cause deterioration in the rolling resistance property.

The non-modified SBR is preferably used in an amount of 10% by mass or more, and more preferably 15% by mass or more in 100% by mass of the rubber component. Less than 10% by mass of the non-modified SBR tends to cause deterioration in grip performance (especially, wet grip performance) and kneadability.

The non-modified SBR is preferably used in an amount of 40% by mass or less, and more preferably 35% by mass or less. More than 40% by mass of the non-modified SBR tends to cause deterioration in the rolling resistance property. In the case that the non-modified SBR contains an oil ingredient (that is, the non-modified SBR is an oil-extended rubber), the amount of the non-modified SBR means the solids content (rubber content).

In addition to the modified SBR and the non-modified SBR, the rubber composition of the present invention may further contain other rubbers including diene rubbers such as natural rubber (NR), isoprene rubber (IR), butadiene rubber (BR), acrylonitrile-butadiene rubber (NBR), chloroprene rubber (CR), butyl rubber (IIR), and styreneisoprene-butadiene copolymer rubber (SIBR). Each of these diene rubbers may be used alone or two or more of these may be used in combination. In particular, NR is preferable owing to its abilities to reduce rolling resistance and to improve

abrasion resistance. In addition, BR is preferable owing to its abilities to improve abrasion resistance and cut and chip resistance.

The NR is not particularly limited. Examples thereof include those commonly used in the tire industry such as SIR20, RSS#3, and TSR20.

In the case that the rubber composition of the present invention contains NR, the NR content in 100% by mass of the rubber component is preferably 10% by mass or more, and more preferably 20% by mass or more. A rubber component with an NR content of less than 10% by mass may cause deterioration in kneadability. The NR content is preferably 50% by mass or less, and more preferably 45% by mass or less. A rubber component with an NR content of more than 50% by mass tends to cause deterioration in cut and chip resistance.

The BR is not particularly limited. Examples thereof include: high cis-content BR such as BR1220 (ZEON Corp.), and BR130B and BR150B (Ube Industries, Ltd.); and BR containing a syndiotactic polybutadiene crystal such as VCR412 and VCR617 (Ube Industries, Ltd.). In particular, the BR preferably has a cis content of 95% by mass or more because such BR leads to improvement in abrasion resistance.

In the case that the rubber composition of the present invention contains BR, the BR content in 100% by mass of the rubber component is preferably 5% by mass or more, and more preferably 10% by mass or more. A rubber component with a BR content of less than 5% by mass tends to cause less improvement in abrasion resistance.
The BR content is preferably 30% by mass or less, and more preferably 25% by mass or less. A rubber component with a BR content of more than 30% by mass tends to cause a great reduction in grip performance (especially, wet grip performance).

In the present invention, a filler (reinforcing filler) including silica is used. As the rubber composition contains silica as filler, rolling resistance is reduced while grip performance (especially, wet grip performance) is improved.
The rolling resistance may be further reduced by adjusting the amount of the filler including silica to not more than a specific amount.

Examples of other filler (reinforcing filler) ingredients that may be used with silica include carbon black, clay, Austin Black, and aluminum hydroxide.

In the rubber composition, the amount of filler is preferably 40 parts by mass or more, and more preferably 45 parts by mass or more per 100 parts by mass of the rubber component. An amount of filler of less than 40 parts by mass tends to cause insufficient reinforcement. The amount of filler is 80 parts by mass or less, preferably 78 parts by mass or less, and more preferably 75 parts by mass or less per 100 parts by mass of the rubber component. An amount of filler of more than 80 parts by mass tends to cause an increase in rolling resistance and therefore lower fuel economy, and to deteriorate processability upon kneading. In the case that another filler ingredient is used with silica, the amount of filler means the total amount of filler ingredients.

The silica is not particularly limited. Examples thereof include dry silica (silicic anhydride) and wet silica (hydrous silicic acid). Wet silica is preferable because it contains more silanol groups.

The silica preferably has a nitrogen adsorption specific surface area ($N_2SA$) of 50 $m^2/g$ or larger, more preferably 100 $m^2/g$ or larger, further preferably 120 $m^2/g$ or larger, and particularly preferably 180 $m^2/g$ or larger. A silica with an $N_2SA$ of smaller than 50 $m^2/g$ tends to cause reduction in abrasion resistance and cut and chip resistance. The $N_2SA$ of the silica is preferably 300 $m^2/g$ or smaller, and more preferably 250 $m^2/g$ or smaller. A silica with an $N_2SA$ of larger than 300 $m^2/g$ tends to cause deterioration in kneadability.
The nitrogen adsorption specific surface area of silica herein is a value measured by the BET method in accordance with ASTM D3037-81.

The rubber composition preferably contains silica in an amount of 40 parts by mass or more, and more preferably 45 parts by mass or more per 100 parts by mass of the rubber component. Less than 40 parts by mass of silica tends to cause reduction in grip performance (especially, wet grip performance). The amount of silica is preferably 80 parts by mass or less, more preferably 70 parts by mass or less, and further preferably 65 parts by mass or less per 100 parts by mass of the rubber component. More than 80 parts by mass of silica tends to cause difficulty in the dispersion of silica into rubber, likely resulting in lower processability of the rubber composition and lower workability upon kneading.

The silica is preferably used with a silane coupling agent. Thereby, abrasion resistance and kneadability are improved.
The silane coupling agent to be used in the present invention is not particularly limited. Examples thereof include: sulfide-type silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropylmethacrylate monosulfide; mercapto-type silane coupling agents such as 3-mercaptopropyltrimethoxysilane and 2-mercaptoethyltriethoxysilane; vinyl-type silane coupling agents such as vinyltriethoxysilane and vinyltrimethoxysilane; amino-type silane coupling agents such as 3-aminopropyltriethoxysilane and 3-aminopropyltrimethoxysilane; glycidoxy-type silane coupling agents such as γ-glycidoxypropyltriethoxysilane and γ-glycidoxypropyltrimethoxysilane; nitro-type silane coupling agents such as 3-nitropropyltrimethoxysilane and 3-nitropropyltriethoxysilane; and chloro-type silane coupling agents such as 3-chloropropyltrimethoxysilane and 3-chloropropyltriethoxysilane. Each of these may be used alone, or two or more of these may be used in combination. In particular, bis(3-triethoxysilylpropyl)disulfide is preferable because it leads to good kneadability.

The silane coupling agent is preferably used in an amount of 1 part by mass or more, and more preferably 3 parts by mass or more per 100 parts by mass of silica. Less than 1 part by mass of the silane coupling agent tends to insufficiently show its effects. The amount of silane coupling agent is preferably 20 parts by mass or less, and more preferably 15 parts by mass or less per 100 parts by mass of silica. More than 20 parts by mass of the silane coupling agent tends to insufficiently show its effects according to the amount, and to deteriorate processability upon kneading.

The rubber composition of the present invention preferably contains carbon black. Examples of the carbon black to be used include, but not particularly limited to, GPF, FEF, HAF, ISAF, and SAF. The carbon black increases reinforcement and prevents aging due to ultraviolet rays.

The carbon black preferably has a nitrogen adsorption specific surface area ($N_2SA$) of 50 $m^2/g$ or larger, and more preferably 100 $m^2/g$ or larger. A carbon black with an $N_2SA$ of smaller than 50 $m^2/g$ tends to cause insufficient reinforcement. The carbon black preferably has a nitrogen adsorption specific surface area of 250 $m^2/g$ or smaller, and more preferably 200 $m^2/g$ or smaller. A carbon black with an $N_2SA$ of larger than 250 $m^2/g$ is unlikely to be well dispersed and tends to cause reduction in abrasion resistance.

The nitrogen adsorption specific surface area of carbon black may be determined by the method A in accordance with JIS K6217.

The carbon black preferably has a dibutyl phthalate oil absorption (DBP absorption) of 50 ml/100 g or more, and more preferably 80 ml/100 g or more. A carbon black with a DBP absorption of less than 50 ml/100 g tends to cause reduction in reinforcement, likely resulting in insufficient mechanical strength and abrasion resistance. The upper limit of the DBP absorption of the carbon black is not particularly limited.

The DBP absorption of carbon black may be determined in accordance with JIS K6217-4.

In the case that the rubber composition of the present invention contains carbon black, the amount of carbon black is preferably 2 parts by mass or more, and more preferably 5 parts by mass or more per 100 parts by mass of the rubber component. Less than 2 parts by mass of carbon black tends to cause insufficient reinforcement. The amount of carbon black is preferably 30 parts by mass or less, and more preferably 25 parts by mass or less per 100 parts by mass of the rubber component. More than 30 parts by mass of carbon black tends to cause deterioration in the rolling resistance property.

The rubber composition of the present invention contains a predetermined amount of sulfur. Thus, abrasion resistance and cut and chip resistance are improved. Examples of the sulfur include sulfur powder, precipitated sulfur, colloidal sulfur, insoluble sulfur, and highly dispersible sulfur.

If the amount of sulfur is limited in a common rubber composition, the cross-linking density may vary depending on the formulation (for example, the type of rubber component and of filler), likely resulting in a reduction in strength and the like troubles. In contrast, in the rubber composition of the present invention, which contains a rubber component including the modified SBR and the non-modified SBR, and a filler (including silica) in an amount of not more than the specific amount, such a reduction is inhibited and abrasion resistance and cut and chip resistance are favorably improved even though the amount of sulfur is limited.

The amount of sulfur is 0.5 parts by mass or more, and preferably 0.7 parts by mass or more per 100 parts by mass of the rubber component. Less than 0.5 parts by mass of sulfur tends to cause deterioration in abrasion resistance. The amount of sulfur is 1.50 parts by mass or less, preferably 1.40 parts by mass or less, more preferably 1.34 parts by mass or less, and further preferably 1.30 parts by mass or less per 100 parts by mass of the rubber component. More than 1.50 parts by mass of sulfur tends to cause reduction in abrasion resistance and cut and chip resistance.

In addition to the aforementioned ingredients, the rubber composition of the present invention may optionally contain compounding ingredients commonly used for producing a rubber composition, such as zinc oxide, stearic acid, various age resistors, antioxidants, antiozonants, softening agents (e.g. oils), waxes, and vulcanization accelerators.

Examples of the vulcanization accelerators include N-tert-butyl-2-benzothiazolylsulfenamide (TBBS), N-cyclohexyl-2-benzothiazolylsulfenamide (CBS), N,N'-dicyclohexyl-2-benzothiazolylsulfenamide (DZ), mercaptobenzothiazole (MBT), dibenzothiazolyl disulfide (MBTS), and N,N'-diphenylguanidine (DPG). In particular, TBBS is preferable and combination use of TBBS and DPG is more preferable because they enable easy adjustment of vulcanization time (vulcanization rate).

The rubber composition preferably contains a softening agent in an amount of 3 parts by mass or more, and more preferably 5 parts by mass or more per 100 parts by mass of the rubber component. Less than 3 parts by mass of the softening agent tends to cause deterioration in kneadability. The amount of softening agent is preferably 25 parts by mass or less, more preferably 20 parts by mass or less, and further preferably 15 parts by mass or less per 100 parts by mass of the rubber component. More than 25 parts by mass of the softening agent tends to cause reduction in rubber

stiffness, likely resulting in a decrease in abrasion resistance. In the case that a rubber containing an oil ingredient is used in the rubber composition, the amount of softening agent includes the amount of the oil ingredient.
In the rubber composition of the present invention, which contains a rubber component including the modified SBR and the non-modified SBR, a filler (including silica) in an amount of not more than the specific amount, and sulfur in the predetermined amount, excellent kneadability is achieved and the amount of softening agent can be therefore set as mentioned above. As a result, the reduction in abrasion resistance and cut and chip resistance are inhibited, so that a good balance of grip performance (especially, wet grip performance), abrasion resistance, cut and chip resistance, the rolling resistance property (low rolling resistance), and kneadability is achieved.

The rubber composition of the present invention may be produced by a common method. More specifically, the rubber composition may be produced by kneading the aforementioned ingredients with a device such as a Banbury mixer, a kneader, or an open roll mill, and vulcanizing the kneaded mass. The rubber composition may be used for various tire components, particularly suitably for a tread.

The pneumatic tire of the present invention may be produced using the rubber composition by a common method. More specifically, an unvulcanized rubber composition containing the aforementioned ingredients is extruded and processed into the shape of a tire component such as a tread, and then molded with other tire components in a usual manner on a tire building machine to form an unvulcanized tire. Then, the unvulcanized tire is heated and pressurized in a vulcanizer to produce a tire.

## EXAMPLES

The following will describe the present invention in detail referring to, but not limited to, examples.

The respective chemical agents used in Examples and Comparative Examples are listed below.
BR: BR150B (Ube Industries, Ltd., cis content: 97% by mass)
NR: TSR20
Modified SBR 1: HPR355 (JSR Corp., S-SBR modified by compound of formula (1), bound styrene content: 28% by mass, vinyl content: 56% by mass)
Non-modified SBR 1: Tufdene 3830 (Asahi Kasei Corp., S-SBR, bound styrene content: 33% by mass, vinyl content: 34% by mass, oil content: 37.5 parts by mass per 100 parts by mass of rubber solids, non-modified)
Non-modified SBR 2: Nipol 1723 (ZEON Corp., E-SBR, bound styrene content: 23.5% by mass, vinyl content: 18% by mass, oil content: 37.5 parts by mass per 100 parts by mass of rubber solids, non-modified)
Non-modified SBR 3: Tufdene 4850 (Asahi Kasei Corp., S-SBR, bound styrene content: 40% by mass, vinyl content: 46% by mass, oil content: 50 parts by mass per 100 parts by mass of rubber solids, non-modified)
Non-modified SBR 4: SLR6430 (The Dow Chemical Co., S-SBR, bound styrene content: 40% by mass, vinyl content: 14% by mass, oil content: 37.5 parts by mass per 100 parts by mass of rubber solids, non-modified)
Carbon black: DIABLACK I (Mitsubishi Chemical Corp., N220, $N_2SA$: 114 $m^2/g$, DBP absorption: 114 ml/100 g)
Silica: Nipsil VN3 (Nihon Silica Co., Ltd., $N_2SA$: 210 $m^2/g$)
Silane coupling agent: Si266 (Degussa AG, bis(3-triethoxysilylpropyl)disulfide)
Oil: NC300 (Japan Energy Corp.)
Wax: SUNNOC wax (Ouchi Shinko Chemical Industrial Co., Ltd.)
Age resistor: OZONONE 6C (Seiko Chemical Co., Ltd.)
Stearic acid: Stearic acid "KIRI" (NOF Corp.)
Zinc oxide: Ginrei R (Toho Zinc Co., Ltd.)
Sulfur: Sulfur powder (Tsurumi Chemical Industry Co., Ltd.)
Vulcanization accelerator NS: NOCCELER NS (Ouchi Shinko Chemical Industrial Co., Ltd., N-tert-butyl-2-benzothiazolylsulfenamide)
Vulcanization accelerator DPG: NOCCELER D (Ouchi Shinko Chemical Industrial Co., Ltd., N,N'-diphenylguanidine)

### Examples 1 to 5 and Comparative Examples 1 to 4

According to each formulation shown in Table 1, the materials other than the sulfur and vulcanization accelerators were put into a 1.7-L Banbury mixer, and kneaded for 5 minutes at 150°C to provide a kneaded mass. The sulfur and vulcanization accelerators were kneaded into the obtained kneaded mass with an open two-roll mill for 5 minutes at 80°C. Thereby, an unvulcanized rubber composition was prepared. A rubber sheet was formed from the prepared unvulcanized rubber composition. This rubber sheet was press-vulcanized for 35 minutes at 150°C and 25 kgf so that a vulcanized rubber composition was prepared.
In addition, the prepared unvulcanized rubber composition was molded into a tread shape, and assembled with other tire components to form an unvulcanized tire. The unvulcanized tire was vulcanized for 35 minutes at 150°C so that a test tire (tire size: 175/65R15) was produced.

The following evaluations were performed on the thus obtained unvulcanized rubber compositions, vulcanized rubber compositions, and test tires. Table 1 shows the results.

(Hardness)

The hardness (Hs) of each vulcanized rubber composition was measured with a hardness tester at 25°C in accordance with JIS K6253 (Shore A hardness testing). The larger the value is, the harder the composition is.

(Viscoelasticity test)

A strip sample was cut out from each vulcanized rubber composition so as to have a size of: 4 mm in width × 30 mm in length × 1.5 mm in thickness. The sample was measured for loss tangent (tanδ) and complex modulus (E*) at 30°C with a viscoelasticity spectrometer (Iwamoto Seisakusho Co., Ltd.) at an initial strain of 10%, a dynamic strain of 2%, and a frequency of 10 Hz. The smaller the tanδ is, the lower the rolling resistance is and the better the fuel economy is. The larger the E* is, the higher the handling stability is.

(Wet grip performance)

Wet grip performance was evaluated based on the braking performance determined in the evaluation for antilock braking system (ABS). More specifically, each set of test tires was put on a 1800-cc passenger vehicle provided with an ABS. Then, an actual vehicle running test was performed on an asphalt road surface (wet road surface, skid number: about 50), and the deceleration was determined which, as used herein, is a distance required for a vehicle to stop after the brakes are applied at 100 km/h. Based on the following formula, the determined result of each formulation was expressed as an index of wet grip performance relative to a value of 100 representing the deceleration of Comparative Example 1. The larger the index of wet grip performance is, the better the braking performance is and the higher the wet grip performance is.

(Index of wet grip performance) = (Deceleration of Comparative Example 1)/(Deceleration of each formulation)×100

(Abrasion resistance)

Each set of test tires was put on a 1800-cc passenger vehicle provided with an ABS, and the vehicle was driven on a predetermined course for an abrasion test. The depth of grooves on the tire tread part was measured after 8000-km driving. Then, the running distance that made the groove depth decrease by 1 mm was calculated, and was converted into an index value calculated by the following equation. The larger the index value is, the better the abrasion resistance is.

(Index of abrasion resistance) = (Running distance that made groove depth decrease by 1 mm for each formulation)/(Running distance that made groove depth decrease by 1 mm for Comparative Example 1)×100

(Cut and chip resistance)

Each set of test tires was put on a 1800-cc passenger vehicle provided with an ABS, and the vehicle was driven on a graveled course. After 100-km driving, the appearance of the tire tread surface was observed and evaluated (Degree of resistance to tread chipping: Good > Acceptable > Poor).

(Rolling resistance)

Each test tire was made run with a rolling resistance tester under the following conditions: rim, 15x6JJ; internal pressure, 230kPa; load, 3.43 kN; and speed, 80 km/h, so that the rolling resistance thereof was measured. The rolling

resistance of each formulation was expressed as an index value relative to a value of 100 representing the rolling resistance of Comparative Example 1. The smaller the index value is, the lower the rolling resistance is and the better the fuel economy is.

(Keadability)

The Mooney viscosity (ML1+4/130°C) of each unvulcanized rubber composition was determined in accordance with JIS K6300-1 "Rubber, unvulcanized - Physical property - Part 1: Determination of Mooney viscosity and pre-vulcanization characteristics with Mooney viscometer". That is, a Mooney viscosity tester was preheated for 1 minute up to 130°C and a small rotor was rotated under this temperature condition. After a lapse of 4 minutes, the Mooney viscosity was determined. The results were evaluated on a scale of three levels as follows:

Good: lower than 70;
Acceptable: 70 to 90;
Poor: higher than 90.

[Table 1]

| | | Example 1 | Comparative Example 1 | Comparative Example 2 | Comparative Example 3 | Example 2 | Comparative Example 4 | Example 3 | Example 4 | Example 5 |
|---|---|---|---|---|---|---|---|---|---|---|
| Formulation (part(s) by mass) | BR | 15 | – | 15 | 15 | 10 | 10 | 15 | 15 | 15 |
| | NR | – | 30 | – | – | 35 | 35 | – | – | – |
| | Modified SBR 1 (HPR355) | 65 | 70 | 85 | 65 | 35 | 35 | 65 | 65 | 65 |
| | Non-modified SBR 1 (T3830) | 27.5 | – | – | – | 27.5 | – | – | – | 27.5 |
| | Non-modified SBR 2 (SBR1723) | – | – | – | 27.5 | – | 27.5 | – | – | – |
| | Non-modified SBR 3 (T4850) | – | – | – | – | – | – | 30 | – | – |
| | Non-modified SBR 4 (SLR6430) | – | – | – | – | – | – | – | 27.5 | – |
| | Carbon black | 5 | 5 | 5 | 5 | 5 | 5 | 5 | 5 | 5 |
| | Silica | 60 | 75 | 60 | 60 | 60 | 60 | 60 | 60 | 65 |
| | Silane coupling agent | 4.8 | 6.0 | 4.8 | 4.8 | 4.8 | 4.8 | 4.8 | 4.8 | 5.2 |
| | Oil | – | 25 | 10 | – | – | – | – | – | – |
| | Wax | 3 | 3 | 3 | 3 | 3 | 3 | 3 | 3 | 3 |
| | Age resistor | 2.5 | 2.5 | 2.5 | 2.5 | 2.5 | 2.5 | 2.5 | 2.5 | 2.5 |
| | Stearic acid | 2 | 2 | 2 | 2 | 2 | 2 | 2 | 2 | 2 |
| | Zinc oxide | 3 | 3 | 3 | 3 | 3 | 3 | 3 | 3 | 3 |
| | Sulfur | 1.00 | 1.70 | 1.00 | 1.00 | 1.30 | 1.30 | 1.00 | 1.00 | 0.50 |
| | Vulcanization accelerator NS | 1.8 | 1.8 | 1.8 | 1.8 | 1.8 | 1.8 | 1.8 | 1.8 | 1.8 |
| | Vulcanization accelerator DPG | 1.2 | 0.5 | 1.2 | 1.2 | 1.2 | 1.2 | 1.2 | 1.2 | 1.2 |
| Evaluation | Hs | 60 | 60 | 61 | 60 | 60 | 60 | 59 | 60 | 60 |
| | E* (MPa) | 7.3 | 6.8 | 7.5 | 7.1 | 7.3 | 7.1 | 6.8 | 7.5 | 7.0 |
| | Tan δ | 0.160 | 0.195 | 0.150 | 0.165 | 0.165 | 0.170 | 0.170 | 0.165 | 0.170 |
| | Wet grip performance | 100 | 100 | 98 | 95 | 98 | 94 | 102 | 102 | 100 |
| | Abrasion resistance | 108 | 100 | 94 | 110 | 120 | 122 | 107 | 107 | 109 |
| | Cut and chip resistance | Good | Acceptable | Poor | Good | Good | Good | Good | Good | Good |
| | Rolling resistance | 96 | 100 | 95 | 97 | 96 | 97 | 97 | 96 | 97 |
| | Kneadability | Good | Good | Poor | Good | Good | Good | Good | Good | Good |

In Examples wherein the rubber composition contained: a styrene-butadiene rubber modified by the compound of formula (1) (modified SBR 1) which had the specific bound styrene content and vinyl content; a non-modified styrene-butadiene rubber (non-modified SBR 1, non-modified SBR 3, or non-modified SBR 4) which had the predetermined bound styrene content and vinyl content; a filler (including silica) in an amount of not more than the specific amount; and sulfur in the predetermined amount, a good balance of wet grip performance, abrasion resistance, cut and chip resistance, the rolling resistance property (low rolling resistance), and kneadability was achieved. In Example 2 wherein NR was further used, the abrasion resistance was greatly better than in Example 1. On the other hand, in Comparative Examples 1 and 2 wherein the rubber composition was free from a non-modified SBR, the abrasion resistance and cut and chip resistance (also the rolling resistance property (Comparative Example 1), or kneadability (Comparative Example 2)) were inferior to those in Examples. In Comparative Examples 3 and 4 wherein the rubber composition contained a non-modified styrene-butadiene rubber (non-modified SBR 2) which did not have the predetermined bound styrene content, the wet grip performance was lower than in Examples.

**Claims**

**1.** A rubber composition for a tire, comprising:

a rubber component including a styrene-butadiene rubber modified by a compound represented by formula (1):

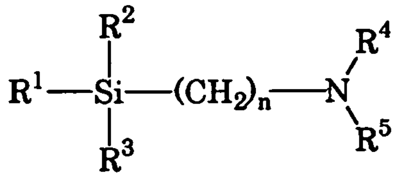

(1)

wherein $R^1$, $R^2$, and $R^3$ may be the same as or different from each other, and each represents an alkyl group, an alkoxy group, a silyloxy group, an acetal group, a carboxyl group, a mercapto group, or a derivative thereof; $R^4$ and $R^5$ may be the same as or different from each other, and each represents a hydrogen atom or an alkyl group; and n is an integer, and
a non-modified styrene-butadiene rubber;
a filler including silica, the filler being in an amount of 80 parts by mass or less per 100 parts by mass of the rubber component; and
sulfur in an amount of 0.5 to 1.5 parts by mass per 100 parts by mass of the rubber component,
the modified styrene-butadiene rubber having a bound styrene content of 20 to 40% by mass and a vinyl content of 30 to 65% by mass, and
the non-modified styrene-butadiene rubber having a bound styrene content of 25 to 45% by mass and a vinyl content of 10 to 50% by mass.

**2.** The rubber composition for a tire according to claim 1,
wherein the rubber component further includes a natural rubber.

**3.** The rubber composition for a tire according to claim 1 or 2, which is used for a tread.

**4.** A pneumatic tire, which is produced using the rubber composition according to any of claims 1 to 3.

**Patentansprüche**

**1.** Kautschukzusammensetzung für einen Reifen enthaltend:

eine Kautschukkomponente, welche einen Styrolbutadienkautschuk enthält, welcher durch eine Verbindung gemäß der Formal (1) modifiziert ist:

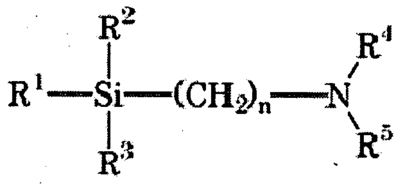 (1)

worin $R^1$, $R^2$, and $R^3$ gleich oder verschieden voneinander sein können und jeder eine Alkylgruppe, eine Alkoxygruppe, eine Silyloxygruppe, eine Acetalgruppe, eine Carboxylgruppe, eine Mercaptogruppe oder ein Derivat hiervon bedeutet; $R^4$ und $R^5$ gleich oder verschieden voneinander sein können und jeder ein Wasserstoffatom oder eine Alkylgruppe bedeutet und n eine ganze Zahl ist, sowie
einen nicht modifizierten Styrenbutadienkautschuk,
einen Füllstoff, welcher Silika enthält, wobei der Füllstoff in einer Menge von 80 Massenteilen oder weniger bezogen auf 100 Massenteile der Kautschukkomponente enthalten ist, sowie
Schwefel in einer Menge von 0,5 bis 1,5 Massenteilen bezogen auf 100 Massenteile der autschukkomponente, wobei der modifizierte Styrolbutadienkautschuk einen gebundenen Styrolgehalt von 20 bis 40 Massen-% sowie einen Vinylgehalt von 30 bis 65 Massen-% aufweist, und
der nicht modifizierte Styrolbutadienkautschuk eine gebundene Styrolmenge von 25 bis 40 Massen-% und einen Vinylgehalt von 10 bis 50 Massen-% aufweist.

**2.** Kautschukzusammensetzung für einen Reifen nach Anspruch 1, wobei die Kautschukkomponente ferner einen Naturkautschuk enthält.

**3.** Kautschukzusammensetzung für einen Reifen nach Anspruch 1 oder 2, welche für eine Lauffläche eingesetzt wird.

**4.** Luftreifen, welcher unter Verwendung einer Kautschukzusammensetzung nach einem der Ansprüche 1 bis 3 hergestellt worden ist.

**Revendications**

**1.** Composition de caoutchouc pour un pneu, comprenant :

un constituant de caoutchouc comprenant un caoutchouc de styrène-butadiène modifié par un composé représenté par la formule (1) :

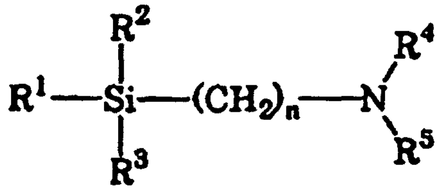 (1)

dans laquelle $R^1$, $R^2$, et $R^3$ peuvent être identiques ou différents les uns des autres, et représentent chacun un groupe alkyle, un groupe alcoxy, un groupe silyloxy, un groupe acétal, un groupe carboxyle, un groupe mercapto, ou un dérivé de ceux-ci ; $R^4$ et $R^5$ peuvent être identiques ou différents les uns des autres, et représentent chacun un atome d'hydrogène ou un groupe alkyle ; et n est un nombre entier, et
un caoutchouc de styrène-butadiène non modifié ;
une charge comprenant de la silice, la charge étant dans une quantité de 80 parties en masse ou inférieure pour 100 parties en masse du constituant de caoutchouc ; et
du soufre dans une quantité de 0,5 à 1,5 parties en masse pour 100 parties en masse du constituant de caoutchouc,
le caoutchouc de styrène-butadiène modifié présentant une teneur en styrène lié de 20 à 40 % en masse et

une teneur en vinyle de 30 à 65 % en masse, et
le caoutchouc de styrène-butadiène non modifié présentant une teneur en styrène lié de 25 à 45 % en masse et une teneur en vinyle de 10 à 50 % en masse.

**2.** Composition de caoutchouc pour un pneu selon la revendication 1, dans lequel le constituant de caoutchouc comprend de plus un caoutchouc naturel.

**3.** Composition de caoutchouc pour un pneu selon la revendication 1 ou 2, laquelle est utilisée pour une bande de roulement.

**4.** Pneumatique, lequel est produit en utilisant la composition de caoutchouc selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009079077 A
- JP H0653768 B
- JP H0657767 B